# EUROPÄISCHE PATENTANMELDUNG

(11) **EP 2 626 184 A1**
(43) Veröffentlichungstag der Anmeldung: **14.08.2013**
(21) Anmeldenummer: 12000876.8
(22) Anmeldetag: 10.02.2012
(51) Int. Cl.: B29C 44/12, B29C 44/32

(54) **Schwamm und Verfahren zur Herstellung eines solchen**

(71) Anmelder: Carl Freudenberg KG, 69469 Weinheim (DE)
(72) Erfinder: Hunger, Marc, Dr., 68519 Viernheim (DE); Komp, Dr. Ansgar, 69117 Heidelberg (DE); Kaul, Dr. Stefan, 69502 Hemsbach (DE); Niklas, Mirco, 64658 Fürth (DE); Kemmerich, Jan, 69469 Weinheim (DE); Ryzko, Peter Dr., 69514 Laudenbach (DE)

(57) **Zusammenfassung**

Ein Schwamm (1, 1', 1", 1"'), umfassend einen geschäumten Grundkörper (2, 2', 2", 2'"), welcher mit einer abrasiven Schicht (3, 3', 3", 3"') versehen ist, wobei die abraslve Schicht (3, 3', 3", 3"') auf einer Teilfläche (4, 4', 4", 4'") des Grundkörpers (2, 2', 2", 2"') angeordnet ist und wobei weitere Teilflächen (5, 5', 5", 5"', 6, 6', 6", 6"') mit einer Profilierung versehen sind, ist im Hinblick auf die Aufgabe, einen Schwamm der eingangs genannten Art derart auszugestalten und weiterzubilden, dass dieser bei einer Minimierung der Abfallmenge und der Menge des Klebstoffs zur Anbringung einer abrasiven Schicht herstellbar ist, dadurch gekennzeichnet, dass die weiteren Teilflächen (5, 5', 5", 5'", 6, 6', 6". 6"'), die eine Profilierung aufweisen, durch ein Verfahren erzeugt sind, bei welchem der Grundkörper (2, 2', 2", 2"') kontinuierlich geschäumt wird.

## Beschreibung

### Technisches Gebiet

Die Erfindung betrifft einen Schwamm gemäß dem Oberbegriff des Patentanspruchs 1.

### Stand der Technik

Aus dem Stand der Technik sind bereits Schwämme bekannt, die einen geschäumten Grundkörper aufweisen und nicht hydrophob sind. Auf dem geschäumten Grundkörper ist eine abrasive Schicht in Form eines rauen textilen Materials angeordnet.

Der geschäumte nicht hydrophobe Grundkörper wird aus einem großen Schaumblock herausgeschnitten. Darauf wird der Grundkörper in aufwendiger Weise durch Abtragen von geschäumtem Material mit einer Profilierung versehen, beispielsweise mit Griffrinnen. Des Weiteren muss die abrasive Schicht mittels eines Klebstoffs auf eine Teilfläche des Grundkörpers auflaminiert werden.

Bei diesem Herstellungsverfahren des Standes der Technik ist nachteilig, dass beim Einbringen der Profilierung eine große Menge an Abfall entsteht. Des Weiteren ist nachteilig, dass zum Anbringen der abrasiven Schicht ein Klebstoff verwendet werden muss.

Bei den aus dem Stand der Technik bekannten, nicht hydrophoben Schwämmen kann überdies eine Delaminierung der abrasiven Schicht auftreten, wenn sich diese nämlich vom Grundkörper ablöst. Daher muss man bei der Auswahl des Klebstoffs eine sehr große Sorgfalt walten lassen, um ein Ablösen der abrasiven Schicht zu verhindern.

Bei dem aus dem Stand der Technik bekannten Herstellungsverfahren ist weiterhin nachteilig, dass zunächst ein großer Block aus geschäumtem Material hergestellt werden muss, der eine relativ lange Zeit zum Aushärten benötigt.

Dieser Block muss dann unter großem logistischem Aufwand entweder an weitere Fertigungsstätten transportiert oder in aufwändigen Arbeitsschritten zusammen geschnitten werden.

Insoweit sind zur Herstellung eines nicht hydrophoben Schwamms, dessen Grundkörper eine profilierte Endform aufweist, eine Vielzahl von Arbeitsschritten durchzuführen, bei denen eine erhebliche Menge an Abfall auftreten kann.

### Darstellung der Erfindung

Der Erfindung liegt daher die Aufgabe zugrunde, einen Schwamm der eingangs genannten Art derart auszugestalten und weiterzubilden, dass dieser bei einer Minimierung der Abfallmenge und der Menge des Klebstoffs zur Anbringung einer abrasiven Schicht herstellbar ist.

Die vorliegende Erfindung löst die zuvor genannte Aufgabe durch die Merkmale des Patentanspruchs 1.

Ein erfindungsgemäßer Schwamm umfasst einen geschäumten Grundkörper, welcher mit einer abrasiven Schicht versehen ist, wobei die abrasive Schicht auf einer Teilfläche des Grundkörpers angeordnet ist und wobei weitere Teilflächen mit einer Profilierung versehen sind.

Erfindungsgemäß ist es vorgesehen, dass die weiteren Teilflächen, die eine Profilierung aufweisen, durch ein Verfahren erzeugt sind, bei welchem der Grundkörper kontinuierlich geschäumt wird.

Erfindungsgemäß ist erkannt worden, dass zur Herstellung eines solchen Schwamms kein großer Block in einzelne Grundkörper zusammengeschnitten werden muss. Weiter ist erkannt worden, dass auch die Aushärtezeit des geschäumten Materials nicht abgewartet werden muss, bevor eine Profilierung in den Grundkörper eingebracht wird. Vielmehr werden die profilierten Teilflächen bereits beim Schäumen des Grundkörpers in ihre Endform verbracht. Erfindungsgemäß wird hierdurch sichergestellt, dass die Abfallmenge beim Einbringen der Profilierung reduziert wird. Gegenüber dem Stand der Technik können so etwa 10 bis 12 % an Abfall eingespart werden. Weiter können zur Herstellung eines solchen Schwamms relativ kleine, lokal einsetzbare Maschinen verwendet werden, da kein großer Block erzeugt werden muss, der in weiteren Schritten zusammengeschnitten wird. Erfindungsgemäß werden logistische Prozesse bei der Herstellung eines erfindungsgemäßen Schwamms vereinfacht. Erfindungsgemäß ist weiter erkannt worden, dass bei einem kontinuierlich geführten Verfahren der Grundkörper derart aufgeschäumt werden kann, das er sich an eine separate abrasive Schicht anlegt. Hierbei kann auf einen Klebstoff verzichtet werden, welcher die abrasive Schicht an dem Grundkörper festlegt. Eine Änderung der Farbe eines Schwamms ist problemlos und unter Anfall von wenig Abfall durchführbar.

Folglich ist die eingangs genannte Aufgabe gelöst.

Die weiteren Teilflächen könnten eine Filmschicht aufweisen, welche die Poren des Grundkörpers an den Teilflächen zumindest teilweise bedecken. Hierdurch wird vorteilhaft eine sehr glatte und schmutzabweisende Oberflächenstruktur an den profilierten Teilflächen geschaffen. Die Filmschicht bildet sich beim Aufschäumen des Grundkörpers aus, wenn nämlich das Material, aus dem der Grundkörper gefertigt wird, eine Grenzfläche mit einer profilierten Wand einer Form bildet. Ganz in Abhängigkeit von dem Material, aus dem die Form gefertigt ist, kann so die Charakteristik der Filmschicht gewählt werden. Des Weiteren wird durch das Material, aus dem die Form gefertigt ist, die Porengröße im Bereich der profilierten Teilflächen beeinflusst. Bevorzugt wird eine Form verwendet, deren profilierte Wand auf der dem Grundkörper zugewandten Seite mit Polytetrafluorethylen (PTFE) beschichtet ist.

Die weiteren Teilflächen könnten an konkav ausgebildeten Griffrinnen ausgebildet sein. Griffrinnen werden an Schwämmen vorgesehen, damit eine Person mit ihren Fingern den Schwamm gut ergreifen kann. Üblicherweise werden die konkav ausgebildeten Griffrinnen aus dem sich noch nicht in seiner Endform befindenden Grundkörper herausgeschnitten oder in anderer Form abgetragen. Die hierbei entstehende Abfallmenge wird minimiert, indem die Griffrinnen beim Aufschäumen des Grundkörpers in-situ erzeugt werden.

Vor diesem Hintergrund ist denkbar, dass der Grundkörper eine Dichte von höchstens 40 kg/m³, bevorzugt von 20 bis 25 kg/m³, aufweist. Ein Schwamm mit einer solchen Dichte zeigt eine Porosität die besonders geeignet ist, Fluide zu absorbieren. Eine Dichte von 25 kg/ m³ stellt sicher, dass der Schwamm von einer Person leicht auswringbar ist.

Der Grundkörper könnte Polyurethan aufweisen. Hierdurch ist vorteilhaft ein nicht hydrophober Schwamm realisiert. Dabei ist denkbar, Mischungen aus Polyurethan und Polyester oder Polyurethan und Polyether zu verwenden.

Die abrasive Schicht könnte als abrasives Textilmaterial ausgestaltet sein, welches mit dem Grundkörper stoffschlüssig verbunden ist. Vorteilhaft wird zur Verbindung des Grundkörpers mit der abrasiven Schicht kein zusätzlicher Klebstoff verwendet. Beim Aufschäumen des Grundkörpers geht das noch weiche Material, aus dem der Grundkörper gefertigt ist, einen Stoffschluss mit einer abrasiven Schicht ein.

Die Fasern des abrasiven Textilmaterials werden auch zumindest teilweise von dem Material, aus dem der Grundkörper gefertigt ist, umschlungen. Bei dieser Art der Anbindung einer abrasiven Schicht wurde ein Vorurteil der Fachwelt überkommen, nämlich dass eine Sperrschicht notwendig ist, um das Material daran zu hindern, eine relativ offenporige abrasive Schicht zu durchwandern. Es hat sich überraschend herausgestellt, dass eine solche Sperrschicht nicht notwendig ist und das Material zwar flüssig genug ist, profilierte Wände einer Form zu umschließen, jedoch zu viskos ist, um die abrasive Schicht vollständig zu durchfließen.

Vor diesem Hintergrund könnte das Material, aus dem der Grundkörper geschäumt ist, ohne zusätzlichen Klebstoff mit dem abrasiven Textilmaterial verbunden sein. Durch diese konkrete Ausgestaltung kann in umweltfreundlicher Weise auf zusätzliche Klebstoffe verzichtet werden. Eine Delaminierung der abrasiven Schicht vom Grundkörper wird wirksam vermieden, weil nämlich der Grundkörper stoffschlüssig mit der abrasiven Schicht verbunden ist.

Mindestens eine Teilfläche könnte mit einer Prägung in Form von Bildzeichen und/ oder Buchstaben versehen sein. Die Prägung kann beim Schäumen des Grundkörpers in-situ in diesen eingebracht werden. Hierzu kann eine Wand einer Form mit einer Positivprägung oder Negativprägung der Bildzeichen und/ oder Buchstaben versehen sein. Eine nachträgliche Bedruckung des Grundkörpers ist somit nicht mehr notwendig.

Vor diesem Hintergrund ist denkbar, dass in das Material, aus welchem der Grundkörper gefertigt ist, Farbstoffe eingemischt sind. So kann der Grundkörper in beliebiger Weise gefärbt sein. Bei der Herstellung eines sehr großen Blocks, der in weiteren Schritten zugeschnitten werden muss, gestaltet sich eine gleichmäßige Färbung als schwierig. Aufgrund der Größe des Blocks kann es zu einem Absetzverhalten von Färbemitteln kommen. Die dann aus dem Block heraus geschnittenen Grundkörper können dann in ihrer Färbung unterschiedlich sein oder Konturen bzw. Färbungsgrenzen aufweisen. Diese Nachteile des Standes der Technik werden durch den hier beschriebenen Schwamm überwunden. Überdies wird die Abfallmenge bei der Schaffung von Farbübergängen reduziert.

Ein Verfahren zur kontinuierlichen Herstellung eines Schwamms der hier beschriebenen Art könnte die folgenden Schritte umfassen: Bereitstellen einer Form mit mindestens einer profilierten Wand, Einbringen eines schäumfähigen Materials in die Form durch eine Einbringdüse, Aufschäumen des Materials, so dass dieses an die profilierte Wand gepresst wird, wobei entweder die Einbringdüse oder die Form derart verfahren wird, dass sich eine kontinuierliche oder eine sich periodisch wiederholende Bewegung der Einbringdüse relativ zur Form einstellt.

Durch ein solches Verfahren wird gerade kein Batch-Prozess realisiert, sondern ein kontinuierliches Verfahren. Bei diesem kontinuierlichen Verfahren wird ein langer Strang aus geschäumtem Material erzeugt, aus welchem später die Grundkörper des hier beschriebenen Schwamms in ihrer Endlänge heraus geschnitten werden. Der längliche Strang muss lediglich in einzelne Segmente geschnitten werden, welche dann die fertigen Schwämme darstellen. Eine weitere Profilierung von Teilflächen ist nicht mehr erforderlich.

Der Grundkörper könnte mit der abrasiven Schicht verbunden werden, indem diese als obere Begrenzung der Form nach Art eines Deckels vorgelegt wird. Hierdurch ist sichergestellt, dass die abrasive Schicht nicht so stark durchdrungen wird, dass diese nach Aushärten des aufschäumenden Materials zu hart ist.

Vor diesem Hintergrund könnte der Grundkörper mit der abrasiven Schicht verbunden werden, indem diese entweder auf dem aufschäumenden Material abgelegt wird oder indem das Material auf eine vorgelegte abrasive Schicht aufgebracht wird. Durch diese Verfahrensschritte ist eine kontinuierliche Zuführung eines langen Bandes aus abrasiver Schicht zum schäumfähigen Material ermöglicht.

Konkret ist hierbei denkbar, dass die abrasive Schicht von einer Rolle abgerollt und auf das aufschäumende Material abgelegt wird. Das noch weiche aufschäumende Material dringt in die abrasive Schicht ein und geht mit dieser einen Stoffschluss ein.

Wie bereits oben erläutert, ist auch denkbar, dass die abrasive Schicht eine obere Begrenzung der Form bildet. Das noch weiche aufschäumende Material dringt in die abrasive Schicht ein und geht mit dieser einen Stoffschluss ein. Hierbei ist sichergestellt, dass die abrasive Schicht nicht so durchflossen wird, dass diese nach Aushärten des aufschäumenden Materials zu hart ist.

Vor diesem Hintergrund ist denkbar, dass die abrasive Schicht von einer Rolle abgerollt und als Auflage vorgelegt wird, wobei auf diese Auflage das aufschäumende Material aufgetragen wird. Durch diesen Verfahrensschritt wird die abrasive Schicht direkt mit dem späteren Grundkörper laminiert.

Bei der Durchführung des kontinuierlichen Verfahrens kann selbstverständlich auch ein Logo oder eine Markenbezeichnung in-situ in den Grundkörper eingeprägt werden. Das Logo kann am Boden und/ oder an weiteren Teilflächen des Grundkörpers eingeprägt sein.

Letztlich wird die Länge und Geometrie der bei dem kontinuierlichen Verfahren verwendeten Form durch die Steigzeit und Härtezeit des schäumfähigen Materials bestimmt, welches die, insbesondere umlaufende, Form ausfüllt.

Insbesondere ist denkbar, eine umlaufende bzw. im Kreis geführte Form zu verwenden. Hierbei würde die Form das schäumfähige Material dann frei geben, wenn dieses ausreichend gehärtet ist. Die Abschnitte der Form, welche das schäumfähige Material freigegeben haben, könnten dann wieder in die Nähe der Einbringdüse verbracht werden, um dort frisches, noch nicht gehärtetes schäumfähiges Material aufzunehmen und in die profilierte Form zu zwingen.

Vor diesem Hintergrund könnte die abrasive Schicht der Form kontinuierlich zugeführt werden. Die abrasive Schicht kann von einer Rolle abgerollt und als Auflage oder als Begrenzung für das aufschäumende Material vorgelegt werden.

### Kurzbeschreibung der Zeichnung

In der Zeichnung zeigen
- Fig. 1: vier perspektivische Ansichten verschiedener Schwämme der hier beschriebenen Art,
- Fig. 2: eine Teilfläche eines Schwamms, in welche ein Logo eingeprägt ist,
- Fig. 3: eine perspektivische Ansicht einer Vorrichtung zur Durchführung eines Verfahrens zur kontinuierlichen Herstellung eines Schwamms,
- Fig. 4: eine Draufsicht auf die Querseite einer Form mit zwei profilierten Wänden, und
- Fig. 5: eine perspektivische Ansicht der Form gemäß Fig. 4.

### Ausführung der Erfindung

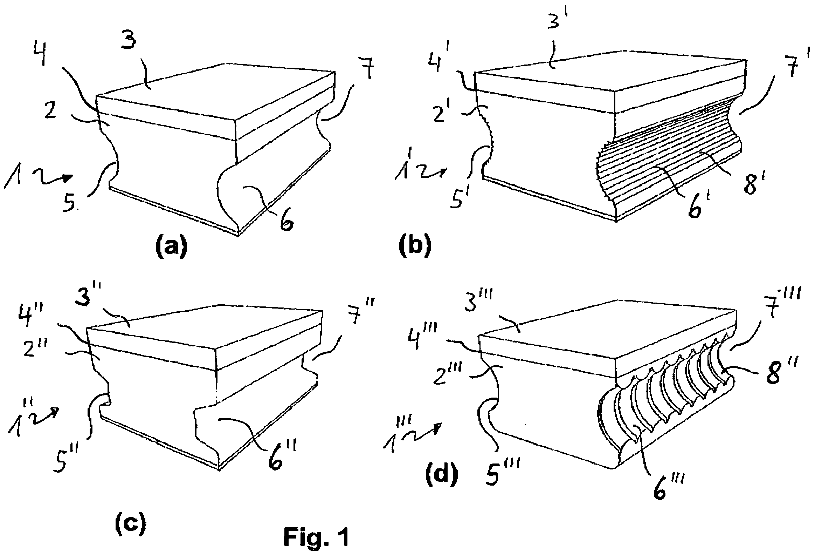

Fig. 1 zeigt in der linken oberen Ansicht eine perspektivische Ansicht eines Schwamms 1, umfassend einen geschäumten Grundkörper 2 welcher mit einer abrasiven Schicht 3 versehen ist, wobei die abrasive Schicht 3 auf einer Teilfläche 4 des Grundkörpers 2 angeordnet ist und wobei weitere Teilflächen 5, 6 mit einer Profilierung versehen sind.

Die weiteren Teilflächen 5, 6, die eine Profilierung aufweisen, sind durch ein Verfahren erzeugt, bei welchem der Grundkörper 2 kontinuierlich geschäumt wird.

Die linke obere Ansicht der Fig. 1 zeigt weitere Teilflächen 5, 6 die an konkav ausgebildeten Griffrinnen 7 ausgebildet sind. In der linken oberen Ansicht der Fig. 1 ist die Griffrinne 7 halbkreisförmig mit einer ebenen Oberfläche ausgestaltet.

In der rechten oberen Ansicht der Fig. 1 ist die Griffrinne 7` ebenfalls halbkreisförmig ausgebildet, wobei jedoch deren Oberfläche Längsrillen 8' aufweist.

In der rechten unteren Ansicht der Fig. 1 ist die konkav ausgebildete Griffrinne 7" im Querschnitt im Wesentlichen trapezförmig ausgestaltet und weist eine glatte Oberfläche auf.

In der rechten unteren Ansicht der Fig. 1 ist die konkav ausgebildete Griffrinne 7'" halbkreisförmig ausgebildet und weist eine Oberfläche auf, die mit ebenfalls halbkreisförmig ausgebildeten Bogenrillen 8" versehen ist.

Die weiteren Teilflächen 5, 6 weisen jeweils eine Filmschicht auf, welche die Poren des Grundkörpers 2 an den Teilflächen 5, 6 zumindest teilweise bedecken. Die in Bezug auf den Schwamm 1 gemäß der linken oberen Ansicht der Fig. 1 gemachten Ausführung in Bezug auf die Filmschicht gelten auch für alle weiteren in Fig. 1 dargestellten Schwämme 1', 1". 1'".

Die Schwämme 1.1', 1". 1"'sind nicht hydrophob. Insbesondere ist deren Grundkörper 2, 2', 2", 2'" nicht hydrophob.

Der Grundkörper 2, 2', 2", 2"' weist eine Dichte von höchstens 40 kg/m³, bevorzugt von 20 bis 25 kg/m³, auf.

Die abrasive Schicht 3, 3', 3", 3"' ist als abrasives Textilmaterial ausgestaltet, welches mit dem Grundkörper 2,2', 2", 2"' stoffschlüssig verbunden ist.

Das Material, aus dem der Grundkörper 2,2', 2", 2"' geschäumt ist, ist ohne zusätzlichen Klebstoff mit dem abrasiven Textilmaterial verbunden.

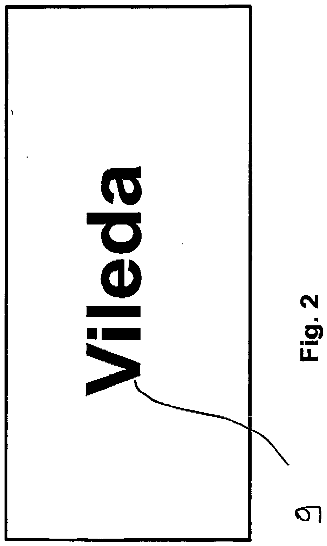

Fig. 2 zeigt, dass mindestens eine Teilfläche mit einer Prägung 9 in Form von Bildzeichen und/ oder Buchstaben versehen ist.

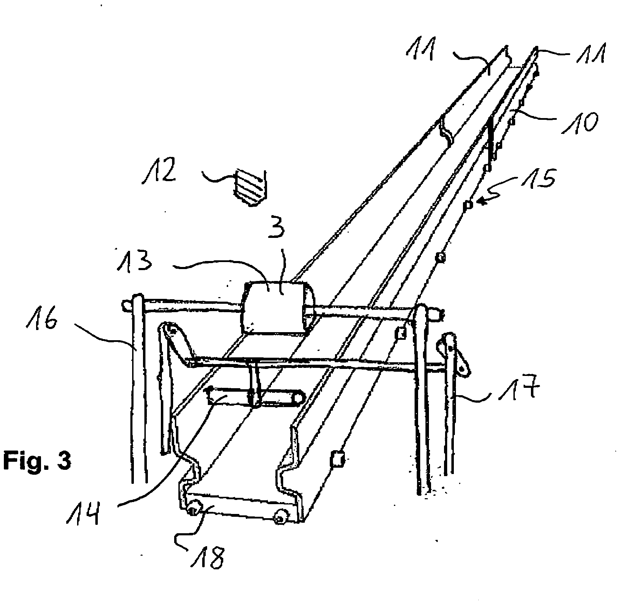

Fig. 3 zeigt eine perspektivische Ansicht einer Vorrichtung zur Durchführung eines Verfahrens zur kontinuierlichen Herstellung eines Schwamms, wie er in Fig. 1 dargestellt ist.

Das Verfahren umfasst die folgenden Schritte: Bereitstellen einer Form 10 mit mindestens einer profilierten Wand 11, Einbringen eines schäumfähigen Materials in die Form 10 durch eine Einbringdüse 12, Aufschäumen des Materials, so dass dieses an die profilierte Wand 11 gepresst wird, wobei die Form 10 derart verfahren wird, dass sich eine kontinuierliche Bewegung der Einbringdüse 12 relativ zur Form 10 einstellt.

Der Grundkörper 2 wird mit der abrasiven Schicht 3 verbunden, indem diese auf dem aufschäumenden Material abgelegt wird. Die abrasive Schicht 3 wird der Form 10 kontinuierlich zugeführt. Dies erfolgt, in dem die abrasive Schicht 3 von einer Rolle 13 abgerollt wird. Die Einbringdüse 12 ist als Extrusionsdüse ausgestaltet.

Die Vorrichtung weist eine Anpressrolle 14 auf, welche die abrasive Schicht 3 von oben derart gegen das aufschäumende Material presst, das dieses zumindest teilweise in die abrasive Schicht 3 eindringt und mit dieser einen Formschluss und/ oder einen Stoffschluss eingeht.

Es hat sich auch als vorteilhaft erwiesen, wenn die abrasive Schicht 13 eine obere Begrenzung der Form 10 bildet. Hierbei fungiert die abrasive Schicht 13 quasi als fester Deckel, gegen den das aufschäumende Material andrücken kann.

Durch das zuvor beschriebene Verfahren wird ein endloser Schaumstrang aus Polyurethan erzeugt, der mit einer abrasiven Schicht 3 bedeckt ist und der an seinen seitlichen Teilflächen 5, 6 mit konkav ausgebildeten Griffrinnen 7 versehen ist.

Dieser Schaumstrang kann nun abgelängt werden, um einzelne Schwämme 1, wie sie in Fig. 1 dargestellt sind, aus dem endlosen Schaumstrang zu erzeugen. Die Schwämme 1 können quasi wie Scheiben von einer Wurst abgeschnitten werden. Eine weitere Behandlung der Schwämme 1 ist nicht notwendig, da diese bereits in ihre profilierte Endform verbracht sind.

Die zuvor beschriebene Vorrichtung weist eine Gießleiste 15 auf, auf der die Form 10 beweglich geführt ist. Die Vorrichtung weist des Weiteren ein Gestell 16 auf, an welchem die Rolle 13 drehbar angelenkt ist.

Schließlich ist ein Rollengestell 17 vorgesehen, an welchem die Anpressrolle 14 derart angeordnet ist, dass diese von oben gegen das aufschäumende Material einen Widerstand bieten kann. Wie zuvor beschrieben, ist aber auch denkbar, dass die abrasive Schicht 13 einen festen Deckel der Form 10 ausbildet.

Die zuvor beschriebene Vorrichtung ist relativ kompakt und daher an verschiedenen Orten problemlos einsetzbar und aufstellbar.

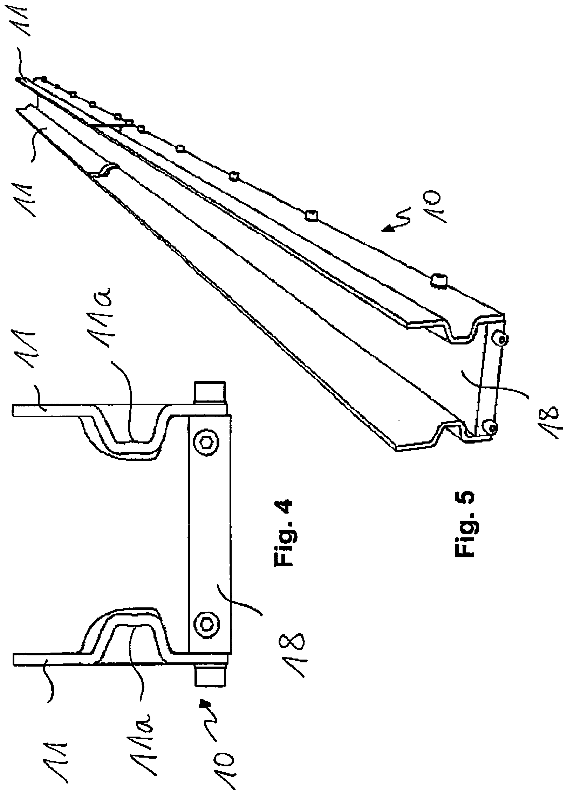

Fig. 4 und Fig. 5 zeigen die Form 10 in perspektivischen Ansichten. Die Form 10 weist einen Boden 18 auf, von welchem zwei einander gegenüberliegende profilierte Wände 11 abragen.

Hierdurch bildet die Form 10 eine Wanne, in welche das schäumfähige Material durch die Einbringdüse 12 eingebracht wird. Die Wanne wird durch die abrasive Schicht 3 von oben derart bedeckt, dass das schäumfähige Material nur bis zur abrasiven Schicht 3 aufsteigen kann. Überraschend problemlos umfließt das schäumfähige Material ins Innere der Wanne gerichtete Einbuchtungen 11 a der profilierten Wände 11.

Die profilierten Wände 11 und der Boden 18 können umlaufend ausgestaltet sein.

Die profilierten Wände 11 und der Boden 18 können als Bänder oder aneinander gesetzte Formen ausgestaltet sein.

## Patentansprüche

1. Schwamm (1, 1', 1", 1'"), umfassend einen geschäumten Grundkörper (2, 2', 2", 2"'), welcher mit einer abrasiven Schicht (3, 3', 3", 3"') versehen ist, wobei die abrasive Schicht (3, 3', 3", 3"') auf einer Teilfläche (4, 4'. 4", 4"') des Grundkörpers (2, 2', 2", 2"') angeordnet ist und wobei weitere Teilflächen (5, 5', 5", 5"', 6, 6', 6", 6'") mit einer Profilierung versehen sind,
**dadurch gekennzeichnet, dass** die weiteren Teilflächen (5, 5', 5", 5"', 6, 6', 6", 6"'), die eine Profilierung aufweisen, durch ein Verfahren erzeugt sind, bei welchem der Grundkörper (2, 2', 2", 2'") kontinuierlich geschäumt wird.

2. Schwamm nach Anspruch 1, **dadurch gekennzeichnet, dass** die weiteren Teilflächen (5, 5', 5", 5"', 6, 6', 6", 6"') eine Filmschicht aufweisen, welche die Poren des Grundkörpers (2, 2', 2", 2"') an den Teilflächen zumindest teilweise bedecken.

3. Schwamm nach Anspruch 1 oder 2, **dadurch gekennzeichnet, dass** die weiteren Teilflächen (5, 5', 5", 5"', 6, 6', 6", 6"') an konkav ausgebildeten Griffrinnen (7, 7', 7", 7'") ausgebildet sind.

4. Schwamm nach einem der voranstehenden Ansprüche, **dadurch gekennzeichnet, dass** der Grundkörper (2, 2', 2", 2'") eine Dichte von höchstens 40 kg/m³, bevorzugt von 20 bis 25 kg/ m³, aufweist.

5. Schwamm nach einem der voranstehenden Ansprüche, **dadurch gekennzeichnet, dass** der Grundkörper (2, 2', 2", 2"') Polyurethan aufweist.

6. Schwamm nach einem der voranstehenden Ansprüche, **dadurch gekennzeichnet, dass** die abrasive Schicht (3, 3', 3", 3"') als abrasives Textilmaterial ausgestaltet ist, welches mit dem Grundkörper (2, 2', 2", 2'") stoffschlüssig verbunden ist.

7. Schwamm nach dem voranstehenden Anspruch, **dadurch gekennzeichnet, dass** das Material, aus dem der Grundkörper (2, 2', 2", 2"') geschäumt ist, ohne zusätzlichen Klebstoff mit dem abrasiven Textilmaterial verbunden ist.

8. Schwamm nach einem der voranstehenden Ansprüche, **dadurch gekennzeichnet, dass** mindestens eine Teilfläche mit einer Prägung (9) in Form von Bildzeichen und/ oder Buchstaben versehen ist.

9. Verfahren zur kontinuierlichen Herstellung eines Schwamms (1, 1', 1", 1"') nach einem der voranstehenden Ansprüche, umfassend die folgenden Schritte:
Bereitstellen einer Form (10) mit mindestens einer profilierten Wand (11), Einbringen eines schäumfähigen Materials in die Form (10) durch eine Einbringdüse (12), Aufschäumen des Materials, so dass dieses an die profilierte Wand (11) gepresst wird, wobei entweder die Einbringdüse (12) oder die Form (10) derart verfahren wird, dass sich eine kontinuierliche oder eine sich periodisch wiederholende Bewegung der Einbringdüse (12) relativ zur Form (10) einstellt.

10. Verfahren nach Anspruch 9, **dadurch gekennzeichnet, dass** der Grundkörper (2, 2', 2", 2'") mit der abrasiven Schicht (3, 3', 3", 3"') verbunden wird, indem diese als obere Begrenzung der Form (10) nach Art eines Deckels vorgelegt wird.

11. Verfahren nach Anspruch 9, **dadurch gekennzeichnet, dass** der Grundkörper (2, 2', 2", 2'") mit der abrasiven Schicht (3, 3', 3", 3'") verbunden wird, indem diese entweder auf dem aufschäumenden Material abgelegt wird oder indem das Material auf eine vorgelegte abrasive Schicht (3, 3', 3", 3"') aufgebracht wird.

12. Verfahren nach Anspruch 10 oder 11, **dadurch gekennzeichnet, dass** die abrasive Schicht (3, 3'. 3", 3'") der Form (10) kontinuierlich zugeführt wird.
